# EUROPEAN PATENT SPECIFICATION

(11) **EP 0 769 612 B1**
(45) Date of publication and mention of the grant of the patent: **26.09.2001**
(21) Application number: 96116806.9
(22) Date of filing: 18.10.1996
(51) Int. Cl.: F02D 41/22, F02D 41/24

(54) **Apparatus for detecting intake pressure abnormalities in an engine**
Gerät zur Feststellung von Einlassdruckabnormalität einer Brennkraftmaschine
Dispositif pour détecter des anomalies de pression d'admission d'un moteur à combustion

(30) Priority: 20.10.1995 JP 27285295
(43) Date of publication of application: 23.04.1997
(73) Proprietor: TOYOTA JIDOSHA KABUSHIKI KAISHA, Aichi-ken 471-8571 (JP)
(72) Inventor: Andou, Ken, Toyota-shi, Aichi-ken 471 (JP)
(74) Representative: Winter, Brandl, Fürniss, Hübner, Röss, Kaiser, Polte Partnerschaft

(56) References cited:
- EP-A- 0 581 151
- US-A- 4 393 842
- US-A- 4 483 299
- US-A- 4 498 443
- US-A- 4 704 685

## Description

### TECHNICAL FIELD

The present invention relates generally to an apparatus for detecting an abnormality associated with the intake pressure of an engine. More particularly, this invention relates to an abnormality detecting apparatus that detects the intake pressure with a sensor and detects an abnormality associated with the intake pressure, which includes a failure of the sensor.

### RELATED BACKGROUND ART

Conventionally, the intake pressure in the air-intake passage of an engine is an important parameter that reflects the running condition of the engine or affects that running condition. A certain kind of engine control apparatus adjusts various control parameters associated with the operation of an engine based on the intake pressure, which is detected by a pressure sensor provided in the air-intake passage. Those various control parameters include, for example, the amount of fuel to be supplied to the engine or the ignition timing for a flammable air-fuel mixture to be supplied to the engine. For an engine that has an air pressure booster such as a supercharger or a turbocharger provided in the air-intake passage, the amount of manipulation of the device is included as one of the control parameters. This control apparatus executes control on the premise that the detection value of the pressure sensor is accurate or the air supply device is properly functioning.

When a failure occurs in the pressure sensor, a pipe associated with the pressure sensor, or in the air supply device itself, the desired accurate value is not detected by the pressure sensor. This may result in a failure to properly adjust various control parameters of the engine.

Japanese Unexamined Patent Publication No. Sho 57-52643 discloses a fuel injection control apparatus for an engine, which is designed to overcome the aforementioned shortcoming. This control apparatus has a pressure sensor in the air-intake passage of the engine for detecting the pressure boosted by the air pressure booster. When the engine is in a predetermined idling state and the detection value of the pressure sensor should indicate a predetermined negative value, this control apparatus compares the detection value with a value close to the atmospheric pressure (a value equivalent to the atmospheric pressure: 760±20 mmHg). When the detection value of the pressure sensor indicates this equivalent value, the control apparatus determines the occurrence of an abnormality in the pressure sensor or that the pipe connecting the pressure sensor to the air-intake passage is disconnected and turns on a warning lamp.

However, the equivalent value used as a reference value for determining an abnormality in the pressure sensor in the disclosed control apparatus is a restrictive value with a slight error considered. Therefore, the equivalent value used as the reference value may change depending on a variation in the location of the engine such as changes in its elevation. The equivalent value used as the reference value may also be varied by dimensional differences of the intake passage between vehicles or by dimensional changes that take place as time elapses such as those caused by wear. At a high elevations, particularly, the atmospheric pressure may become 500 to 600 mmHg, which significantly differs from the reference value, which is set around 760 mmHg. When the pressure in the air-intake passage shifts from the proper value due to a failure in the air pressure booster, for example, the detection value of the pressure sensor deviates from the reference value. In this case, the control apparatus is likely to erroneously determine an abnormality associated with the pressure sensor.

To always acquire the proper reference value as a value equivalent to the atmospheric pressure, an atmospheric pressure sensor capable of always detecting the atmospheric pressure may be provided. The provision of this sensor however complicates the structure of the control apparatus.

EP-A-0 581 151 discloses an apparatus for detecting an intake pressure abnormality of an engine, in accordance with the features of the preamble of claim 1.

### DISCLOSURE OF THE INVENTION

It is the object of the present invention to provide a intake pressure abnormality detecting apparatus for an engine, which detects an abnormality associated with the intake pressure by a pressure sensor provided in the air-intake passage of the engine and which can properly detect an abnormality including failures in the pressure sensor, a pipe associated with this sensor and an air supply device.

This object is solved by the apparatus as defined in claim 1. Advantageous embodiments thereof are the subject watters of the subclaims.

### BRIEF DESCRIPTION OF THE DRAWINGS

The invention and advantages thereof may best be understood by reference to the following description of the presently preferred embodiments together with the accompanying drawings in which:
Figure 1 is a schematic structural diagram illustrating a gasoline engine system equipped with a turbocharger;
Figure 2 is a block diagram showing the structure of an ECU (Electric Control Unit);
Figure 3 is a flowchart illustrating a intake pressure learning routine;
Figure 4 is a flowchart illustrating a intake pressure sensor abnormality determining routine;
Figure 5 is a flowchart illustrating a intake pressure abnormality determining routine;
Figure 6 is a graph indicating two-dimensional function data;
Figure 7 is a graph showing the turbocharge area in the relation between two parameters (TA, NE); and
Figure 8 is a flowchart illustrating a intake pressure abnormality determining routine.

### DESCRIPTION OF THE SPECIAL EMBODIMENT

The first embodiment of the present invention as adapted to a intake pressure abnormality detecting apparatus for an engine, which is embodied in a gasoline engine system for an automobile, will be now described with reference to the accompanying drawings.

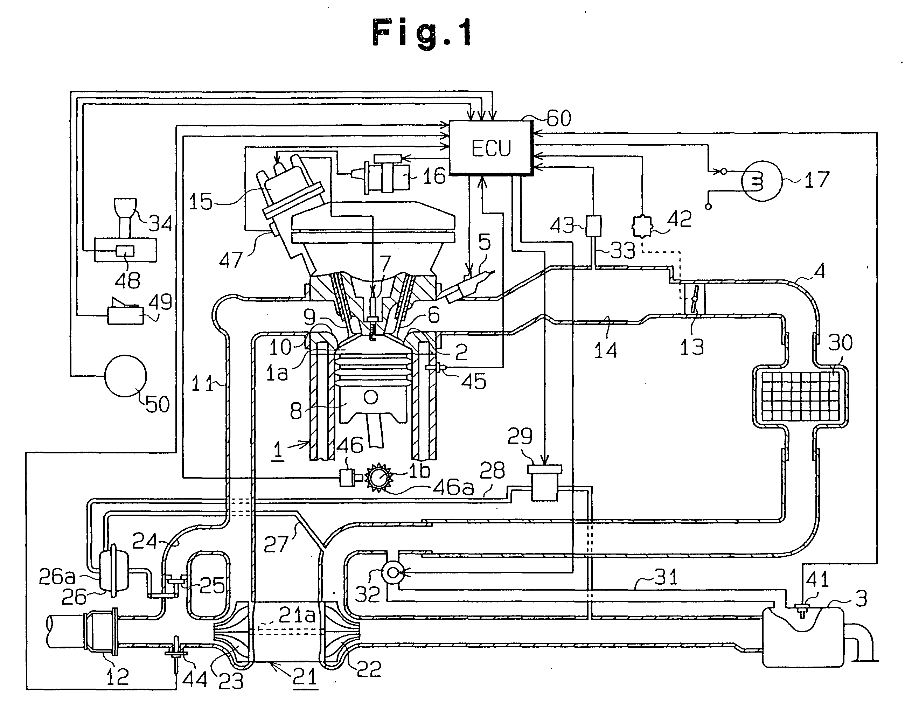

Figure 1 illustrates a gasoline engine system equipped with a turbocharger as an air pressure booster, which is mounted on an automobile. The turbocharger is a device that boosts the air pressure in the air-intake passage to and above the atmospheric pressure and supplies high-density air to a combustion chamber. An engine 1 has a plurality of cylinders each having a combustion chamber 1a. Air led into an air-intake passage 4 from an air cleaner 3 flows through an intake port 2, which is provided for each cylinder. An injector 5 provided for each cylinder injects fuel to the associated intake port 2. Each injector 5 is an electromagnetic valve that is open when energized and is supplied with fuel under pressure from a pump in a fuel tank (neither shown). An intake valve 6 provided for each cylinder opens the associated intake port 2 to supply a flammable air-fuel mixture to the associated combustion chamber 1a. When an ignition plug 7, also provided for each cylinder, is activated, the flammable air-fuel mixture supplied to the associated combustion chamber 1a is burned. As a result of this combustion, pistons 8 move to rotate a crankshaft 1b, thus providing the engine 1 with driving power. When each exhaust port 10 is opened later by an associated exhaust valve 9, provided for each cylinder, the combustion gas is sent out as exhaust gas to an exhaust passage 11 from the associated combustion chamber 1a. The exhaust gas is then cleaned by a catalytic converter 12 and is discharged outside.

A throttle valve 13 provided in the air-intake passage 4 is activated to selectively open or close the air-intake passage 4 in response to the manipulation of an acceleration pedal (not shown). In accordance with the angle of this valve 13, the amount of air (amount of intake air) Q that flows through the air-intake passage 4 is adjusted. A surge tank 14, provided in the air-intake passage 4 downstream of the throttle valve 13, smoothes the pulsation of air that flows through the air-intake passage 4.

A turbocharger 21, provided between the air-intake passage 4 and the exhaust passage 11, turbocharges the air that is supplied into each combustion chamber 1a. The turbocharger 21 has a compressor 22, a turbine 23 and a shaft 21a, which couples the turbine 23 and the compressor 22 together. The compressor 22 is located between the air cleaner 3 and the throttle valve 13 in the air-intake passage 4. The turbine 23 is located in the exhaust passage 11 upstream of the catalyst converter 12. The turbocharger 21 rotates the turbine 23 using the energy of the exhaust gas, which flows through the exhaust passage 11. This torque causes the compressor 22 to rotate together with the turbine 23, thus turbocharging the air that flows through the air-intake passage 4. This turbocharge provides high-density air to each combustion chamber 1a, thereby increasing the output power of the engine 1.

A bypass passage 24 provided in the exhaust passage 11 connects the upstream and downstream sides of the turbine 23. A waste gate valve 25 provided in this passage 24 serves to adjust the degree of turbocharge by the turbocharger 21. A diaphragm type actuator 26 activates the valve 25. A pressure chamber 26a provided in the actuator 26 is connected to the air-intake passage 4 by a first pressure passage 27. The pressure of air turbocharged by the compressor 22 acts on this pressure passage 27. When the turbocharge pressure, which is supplied via this pressure passage 27 to the pressure chamber 26a, exceeds a predetermined value, the actuator 26 is activated. This causes the waste gate valve 25 to open the bypass passage 24. As a result, a part of the exhaust gas that should flow to the turbine 23 bypasses the turbine 23 and flows through the bypass passage 24. Accordingly, the rotation of the turbine 23 is reduced and the turbocharge level of the compressor 22 is reduced. Adjusting the angle of the waste gate valve 25 therefore controls the turbocharge pressure of the turbocharger 21.

The pressure chamber 26a is connected to the air-intake passage 4 by a second pressure passage 28. The pressure of air that has not been turbocharged yet by the compressor 22 acts on this pressure passage 28. A vacuum switching valve (VSV) 29 provided in this pressure passage 28 selectively opens or closes the passage 28. Electric duty control of the angle of this VSV 29 is performed. As the VSV 29 is opened by the proper angle, air pressure lower than the turbocharge pressure is supplied to the pressure chamber 26a via the pressure passage 28. Consequently, the pressure in the pressure chamber 26a drops so that the actuator 26 operates to reduce the angle of the waste gate valve 25.

An intercooler 30 provided in the air-intake passage 4 cools down the air turbocharged by the compressor 22. The temperature of the air turbocharged by the compressor 22 is increased due to the adiabatic compression of the turbocharge and its density is decreased accordingly. This intercooler 30 cools the turbocharged air to increase the density of the turbocharged air.

A bypass passage 31, which extends from the air cleaner 3, is connected to the air-intake passage 4 downstream of the compressor 22. An electromagnetic air bypass valve (ABV) 32 provided in this passage 31 is opened upon energization when the turbocharge pressure becomes excessively high. More specifically, when the turbocharge pressure acquired by the turbocharger 21 exceeds a predetermined upper limit, the ABV 32 is opened. As a result, a part of the air that should flow to the compressor 22 from the air cleaner 3 bypasses the compressor 22 and flows through the bypass passage 31. Consequently, the amount of air, Q, to be turbocharged by the compressor 22 is reduced to suppress a rise in the turbocharge pressure.

An air temperature sensor 41 provided in the vicinity of the air cleaner 3 detects the temperature of air (air temperature) THA that is to be supplied to the air-intake passage 4, and transmits a signal corresponding to the detected temperature. A throttle sensor 42 provided near the throttle valve 13 detects the angle of the valve 13 (throttle angle) TA and transmits a signal corresponding to that angle. This sensor 42 incorporates a known idle switch (not shown). When the throttle valve 13 is fully closed, this switch is set "ON" and sends an idle signal IDL indicative of the fully-closed state.

A intake pressure sensor 43, which is connected to the surge tank 14 via a pipe 33, detects the intake pressure (absolute value) PM including the turbocharge pressure in the surge tank 14 and transmits a signal corresponding to the intake pressure. According to this embodiment, the intake pressure sensor 43 is a semiconductor pressure sensor, the operation of which is based on the property of a crystal (silicon) to charge its electric resistance when pressure is applied. This sensor 43 converts the intake pressure PM to an electric signal, amplifies the signal and transmits the amplified signal. The sensor 43 produces a voltage proportional to the intake pressure PM, which lies within a predetermined range.

An oxygen sensor 44 provided in the exhaust passage 11 detects the density Ox of oxygen remaining in the exhaust gas and transmits a signal corresponding to the detected density. A coolant temperature sensor 45, provided in the engine 1, detects the temperature, THW, of the coolant (coolant temperature) that flows inside the engine 1 and transmits a signal corresponding to the temperature.

A distributor 15 distributes an ignition signal to be applied to the individual ignition plugs 7. An igniter 16 outputs a high voltage to the distributor 15 in synchronism with a change in the rotational angle (crank angle) of the crankshaft 1b. The ignition timing of each ignition plug 7 is determined by the timing at which the high voltage is output from the igniter 16.

A disk-shaped rotor 46a attached to the crankshaft 1b has twelve external teeth formed at equal angular distances of 30° on the outer surface. A crank angle sensor 46 arranged to face the outer surface of the rotor 46a has an electromagnetic pickup. This pickup generates a single pulse when facing each tooth of the rotor 46a. As the rotor 46a rotates in accordance with the rotation of the crankshaft 1b, therefore, the sensor 46 transmits a single pulse every time the crankshaft 1b turns by 30°. In this embodiment, the crankshaft 1b turns twice in a series of four strokes of the engine 1. That is, the sensor 46 detects the crank angle at the ratio of 30° per pulse and outputs a signal indicative of the rotational speed of the crankshaft 1b or an engine speed NE.

The distributor 15 incorporates a disk-shaped rotor (not shown), which has one projection on its outer surface and rotates in synchronism with the rotation of the crankshaft 1b. A top dead center sensor 47 attached to the distributor 15 has an electromagnetic pickup. This pickup generates a single pulse when facing the projection of the rotor. The rotor turns once while the crankshaft 1b turns twice in this embodiment. Therefore, the top dead center sensor 47 transmits a single pulse every time the crankshaft 1b rotates by 720°. The rotor's projection faces the pickup when the piston 8 of a specific one of the cylinders reaches the top dead center (combustion top dead center) in the combustion stroke. When the specific piston reaches the combustion top dead center, therefore, the top dead center sensor 47 transmits a single pulse (hereinafter called "top dead center pulse").

A shift lever 34 provided near the driver's seat in a vehicle is manipulated to shift the transmission (not shown) which is connected to the crankshaft 1b. A shift sensor 48 provided on the lever 34 detects the gear shift positions (e.g., the neutral position, drive position, and reverse position) of the lever 34, and transmits a signal corresponding to the detected position. The neutral position is selected to disconnect the transmission from the crankshaft 1b. The drive position is selected to drive the vehicle forward. The reverse position is selected to move the vehicle backward. When the lever 34 is set to the neutral position, the shift sensor 48 issues a neutral signal NSW indicating such manipulation.

An air conditioning switch 49, provided near the driver's seat, is operated to activate an air conditioning system (not shown). The air conditioning system is powered by the output of the crankshaft 1b. As the switch 49 is set on to activate the air conditioning system, the switch 49 issues a signal indicative of the ON action.

A vehicle speed sensor 50 provided at the transmission detects the speed of the vehicle or a vehicle speed SPD, and issues a signal corresponding to the detected speed.

An alarm lamp 17 provided near the driver's seat serves to inform the driver of an abnormality associated with the intake pressure, which includes an abnormality in the intake pressure sensor 43 when such occurs.

An electronic control unit (ECU) 60 receives signals sent from the aforementioned various kinds of sensors 41 to 50. Based on those signals, the ECU 60 controls the individual injectors 5, the igniter 16, the alarm lamp 17, the VSV 29 and the ABV 32.

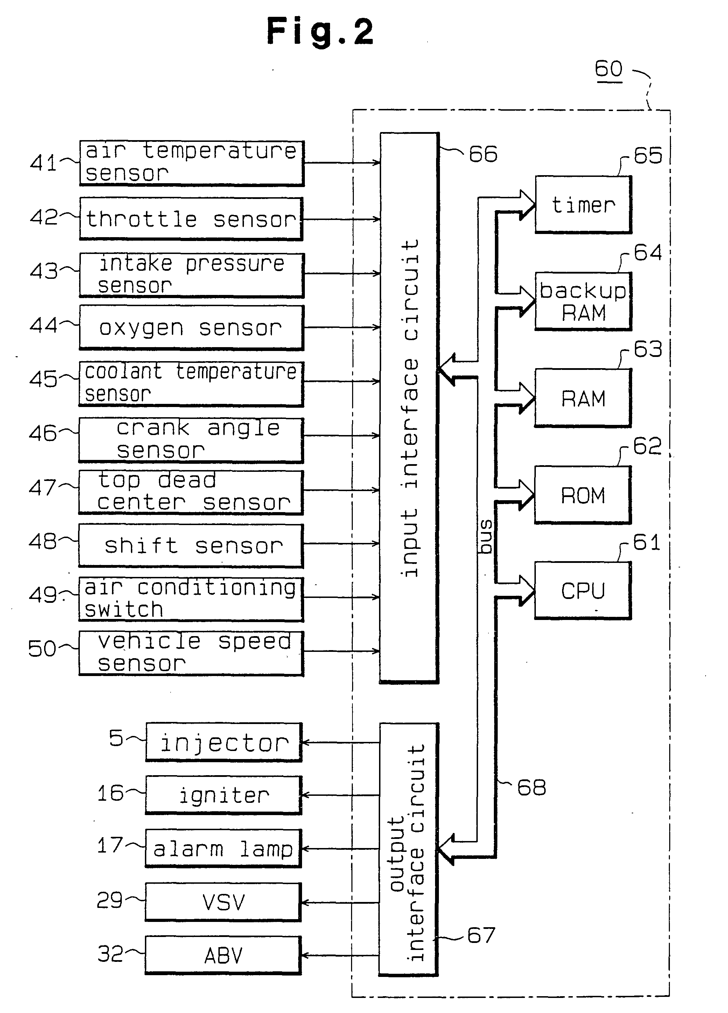

As shown in the block diagram in Figure 2, the ECU 60 includes a central processing unit (CPU) 61, a read only memory (ROM) 62, a random access memory (RAM) 63, a backup RAM 64 and a timer 65. The ECU 60 has those components 61-65 connected to an input interface circuit 66 and an output interface circuit 67 by a bus 68, thus constituting an arithmetic logic unit. Predetermined control programs are previously stored in the ROM 62. The RAM 63 temporarily stores the results of the operations performed by the CPU 61. The backup RAM 64 retains prestored data. The timer 65 is capable of simultaneously performing a plurality of counting operations. The input interface circuit 66 includes a buffer, a wave shaper and an A/D converter, and the output interface circuit 67 includes a drive circuit. The aforementioned various sensors 41 to 50 are connected to the input interface circuit 66, and the individual injectors 5, the igniter 16, the alarm lamp 17, the VSV 29 and the ABV 32 are connected to the output interface circuit 67.

The CPU 61 reads the signals from the various sensors 41-50, which are received via the input interface circuit 66, as input values. Based on the input values, the CPU 61 properly controls the driving of the individual injectors 5, the igniter 16, the alarm lamp 17, the VSV 29 and the ABV 32 to execute various controls, such as the fuel injection amount control including the air-fuel ratio control, the ignition timing control, the turbocharge pressure control and abnormality detection associated with the intake pressure. A battery (not shown) mounted on the vehicle is connected to the ECU 60. The CPU 61 controls the energization of the individual injectors 5, the igniter 16, the alarm lamp 17, the VSV 29 and the ABV 32.

The fuel injection amount control refers to the controlling the amount of fuel to be injected from each injector 5 in accordance with the running condition of the engine 1. The air-fuel ratio control refers to the controlling the air-fuel ratio in the engine 1 based on the detection value of at least the oxygen sensor 44. The ignition timing control refers to the controlling the igniter 16 in accordance with the running condition of the engine 1. Accordingly, each ignition plug 7 is activated to control the ignition timing for the air-fuel mixture in the associated compensation value 1a. The turbocharge pressure control refers to performing duty control of the angle of the VSV 29 based on the running condition of the engine 1, which includes the status of the intake pressure (turbocharge pressure) PM. Accordingly, the angle of the waste gate valve 25 is controlled via the actuator 26. The turbocharge pressure control includes the control of ABV 32 based on the volume of the intake pressure (turbocharge pressure) PM. The abnormality detection for the intake pressure refers to comparing the detection value of the intake pressure sensor 43 with a predetermined reference value. Accordingly, an abnormality associated with the intake pressure, which includes an abnormality in this sensor 43, is detected.

A description will be given of the steps of the process that is associated with the abnormality detection of the intake pressure in the aforementioned various controls.

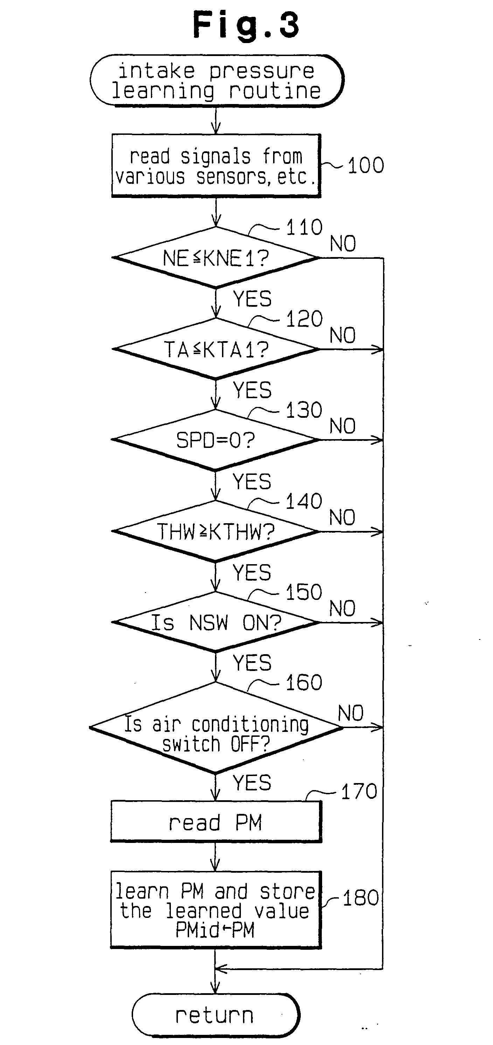

Figure 3 is a flowchart illustrating a intake pressure learning routine, which is set to learn the intake pressure PM when the engine 1 is idling. The ECU 60 executes this routine every predetermined period.

In step 100, the ECU 60 reads the signals issued from the various sensors 42, 45, 46 and 48-50, i.e., the throttle angle TA, the coolant temperature THW, the engine speed NE, the neutral signal NSW, the ON signal of the air conditioning switch 49 and the signal associated with the vehicle speed SPD, as input values.

In step 110, the ECU 60 determines if the value of the engine speed NE is equal to or smaller than a predetermined reference value KNE1. In this embodiment, the reference value KNE1 is equivalent to the upper limit, which indicates that the engine 1 is nearly idling. When the value of the engine speed NE is greater than the reference value KNE1, the ECU 60 determines that the engine 1 is not idling and temporarily terminates the subsequent processing. When the value of the engine speed NE is equal to or smaller than the reference value KNE1, the ECU 60 determines that the engine 1 is substantially idling and proceeds to step 120.

In step 120, the ECU 60 determines if the value of the throttle angle TA is equal to or smaller than a predetermined reference value KTA1. In this embodiment, the reference value KTA1 is equivalent to the upper limit, which indicates that the engine 1 is idling. When the value of the throttle angle TA is greater than the reference value KTA1, the ECU 60 determines that the engine 1 is not idling and temporarily terminates the subsequent processing. When the value of the throttle angle TA is equal to or smaller than the reference value KTA1, the ECU 60 determines that the engine 1 is substantially idling and proceeds to step 130.

In step 130, the ECU 60 determines if the value of the vehicle speed SPD is zero. In this embodiment, this determination is made because the ECU 60 controls the engine speed NE in the idling condition depending on whether the vehicle is stopped. When the value of the vehicle speed SPD is not zero, the ECU 60 determines that the vehicle is not stopped and temporarily terminates the subsequent processing. When the value of the vehicle speed SPD is zero, the ECU 60 determines that the vehicle is stopped and the engine 1 is idling, and proceeds to step 140.

In step 140, the ECU 60 determines if the value of the coolant temperature THW is equal to or greater than a reference value KTHW. In this embodiment, the ECU 60 changes the value of the engine speed NE in the idling condition depending on the difference in the value of the coolant temperature THW. In this respect, the ECU 60 makes the decision in step 140. When the value of the coolant temperature THW is smaller than the reference value KTHW, the ECU 60 determines that the engine 1 is not sufficiently warmed up and temporarily terminates the subsequent processing. When the value of the coolant temperature THW is equal to or greater than the reference value KTHW, the ECU 60 determines that the warm-up of the engine 1 is sufficient and proceeds to step 150.

In step 150, the ECU 60 determines if the neutral signal NSW is enabled. In this embodiment, the transmission is connected to the crankshaft 1b to increase the load on the engine 1 depending on the manipulated position of the shift lever 34. In this respect, the ECU 60 makes the decision in step 150. When the neutral signal NSW is disabled, which means that the shift lever 34 is shifted to the drive position or the reverse position and the transmission is connected to the crankshaft 1b, the ECU 60 temporarily terminates the subsequent processing. When the neutral signal NSW is enabled, which means that the shift lever 34 is shifted to the neutral position and the transmission is not connected to the crankshaft 1b, the ECU 60 moves to step 160.

In step 160, the ECU 60 determines if the air conditioning switch 49 is set OFF. In this embodiment, the air conditioning system is connected to the crankshaft 1b to increase the load on the engine 1 depending on the operation of the air conditioning switch 49. In this respect, the ECU 60 makes the decision in step 160. When the air conditioning switch 49 is set ON, which means that the air conditioning system is connected to the crankshaft 1b, the ECU 60 temporarily terminates the subsequent processing. When the air conditioning switch 49 is set OFF, which means that the air conditioning system is not connected to the crankshaft 1b, the ECU 60 moves to step 170. When the ECU 60 proceeds to step 170 after executing steps 100 to 160, it means that the engine 1 is idling stably in the loadless condition. When the ECU 60 does not proceed to step 170 after the execution of steps 100 to 160, it means that the engine 1 is not idling stably in the loadless condition.

In step 170, therefore, the ECU 60 reads the value of the intake pressure PM then based on the signal from the intake pressure sensor 43. The intake pressure PM at this time indicates a stable constant value.

In the next step 180, the ECU 60 learns the value of this intake pressure PM and stores a learned value PMid into the backup RAM 64. The learning here is a process which includes the comparison and evaluation of the value of the intake pressure PM to be detected, the renewal operation which is performed as needed and the storing of updated values. The ECU 60 compares the value of the currently detected intake pressure PM with the values stored up till then, and evaluates the comparison result. When the currently detected value shows a change, the ECU 60 renews the already stored value to a new value. Therefore, the renewed learned value PMid is stored in the backup RAM 64 only when the engine 1 is stably idling under the loadless condition. When the engine 1 is not stably idling under the loadless condition, the learned value PMid to be stored in the backup RAM 64 is not updated. When the vehicle is moving at low elevation or high elevation, the learned value PMid according to the different atmospheric pressure can be obtained.

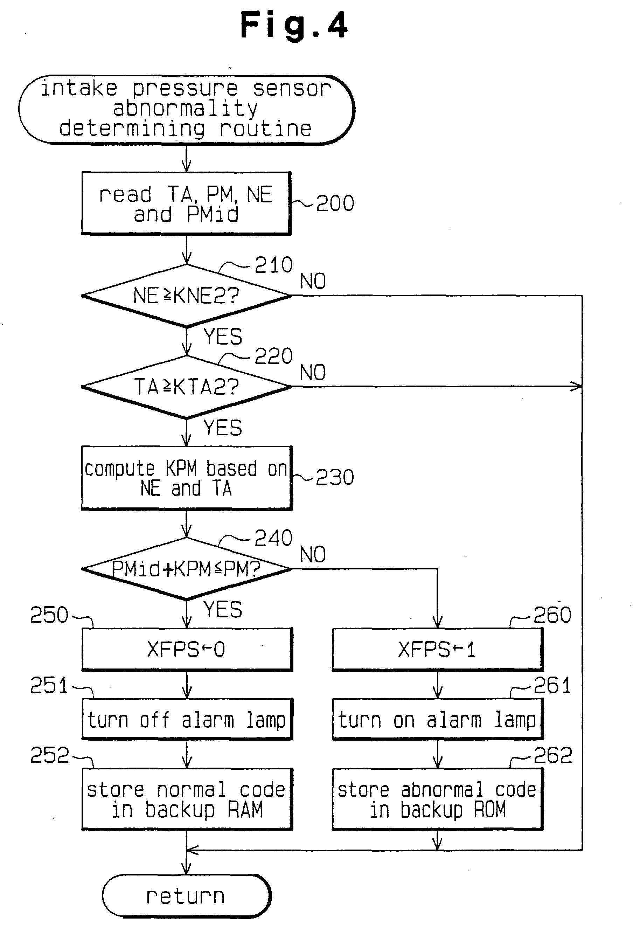

Figure 4 presents a flowchart illustrating a intake pressure sensor abnormality determining routine, which is set to determine an abnormality associated with the intake pressure sensor 43. The ECU 60 executes this routine every predetermined period.

In step 200, the ECU 60 reads the signals output from the various sensors 42, 43, 46, etc., which are associated with the throttle angle TA, the intake pressure PM and the engine speed NE, as input values. In addition, the ECU 60 reads the learned value PMid stored in the backup RAM 64.

In step 210, the ECU 60 determines if the value of the engine speed NE is equal to or greater than a predetermined reference value KNE2. In this embodiment, the reference value KNE2 means a value associated with the engine speed NE which can start the vehicle. The reference value KNE2 is equivalent to a value that is slightly larger than the value in the idling state. When the value of the engine speed NE is smaller than the reference value KNE2, the ECU 60 determines that the engine 1 is not idling and temporarily terminates the subsequent processing because the value of the engine speed NE is not sufficiently high for the execution of the abnormality detection. When the value of the engine speed NE is equal to or greater than the reference value KNE2, which means that the value of the engine speed NE is sufficiently high for the execution of the abnormality detection, the ECU 60 proceeds to step 220.

In step 220, the ECU 60 determines if the value of the throttle angle TA is equal to or greater than a predetermined reference value KTA2. In this embodiment, the reference value KTA2 is equivalent to the lower limit, which indicates that the throttle valve 13 is opened by a certain amount. When the value of the throttle angle TA is smaller than the reference value KTA2, the value of the throttle angle TA is not appropriate for the execution of the abnormality detection so that the ECU 60 temporarily terminates the subsequent processing. When the value of the throttle angle TA is equal to or greater than the reference value KTA2, the value of the throttle angle TA is high enough for the execution of the abnormality detection so that the ECU 60 proceeds to step 230.

In step 230, the ECU 60 computes a compensation value KPM associated with the intake pressure PM according to the running condition of the engine 1 then based on the values of both parameters NE and TA. The ECU 60 computes this compensation value KPM based on function data (map data: not shown) which is preset with respect to both parameters NE and TA.

In step 240, the ECU 60 determines if the value of the currently read intake pressure PM is equal to or greater than the sum of the learned value PMid, which has been learned up to then, and the currently computed compensation value KPM. When the throttle valve 13 is opened and the engine 1 is accelerated, the intake pressure PM in the surge tank 14 approaches to the atmospheric pressure. When the turbocharger 21 is activated, the value of the intake pressure PM further increases. On the premise that the intake pressure sensor 43 is properly functioning, the value of the aforementioned intake pressure PM is properly detected by the sensor 43. When the value of the currently read intake pressure PM is equal to or greater than the sum of the learned value PMid and the compensation value KPM, the ECU 60 determines that the intake pressure sensor 43 is properly functioning and proceeds to step 250.

In step 250, the ECU 60 sets a sensor flag XFPS to zero to record the proper operation of the intake pressure sensor 43, and temporarily stores this flag XFPS into the RAM 63.

In step 251, the ECU 60 turns off the alarm lamp 17. The ECU 60 then stores the normal code indicating that the intake pressure sensor 43 is properly functioning into the backup RAM 64 in step 252, and temporarily terminates the subsequent processing.

When the value of the intake pressure PM is smaller than the sum of the learned value PMid and the compensation value KPM in step 240, the ECU 60 determines that an abnormality has occurred in the intake pressure sensor 43 and proceeds to step 260. One example of an abnormality in the intake pressure sensor 43 is the disconnection of the pipe 33 from the sensor 43 for some reason.

In step 260, the ECU 60 sets the sensor flag XFPS to one to record the abnormality in the intake pressure sensor 43, and temporarily stores this flag XFPS into the RAM 63.

In step 261, the ECU 60 turns on the alarm lamp 17 to inform the driver in the vehicle of the occurrence of an abnormality in the intake pressure sensor 43. In the next step 262, the ECU 60 stores an abnormal code indicative of an abnormality in the intake pressure sensor 43 into the backup RAM 64, and temporarily terminates the subsequent processing. The normal code or abnormal code stored in the backup RAM 64 is read out from the backup RAM whenever needed.

In step 240, the ECU 60 compares the learned value PMid with the value of the intake pressure PM which is the detection value of the intake pressure sensor 43 to determine if the difference between both values PMid and PM is smaller than the compensation value KPM. Accordingly, the ECU 60 determines if an abnormality associated with the intake pressure or the intake pressure sensor 43 has occurred.

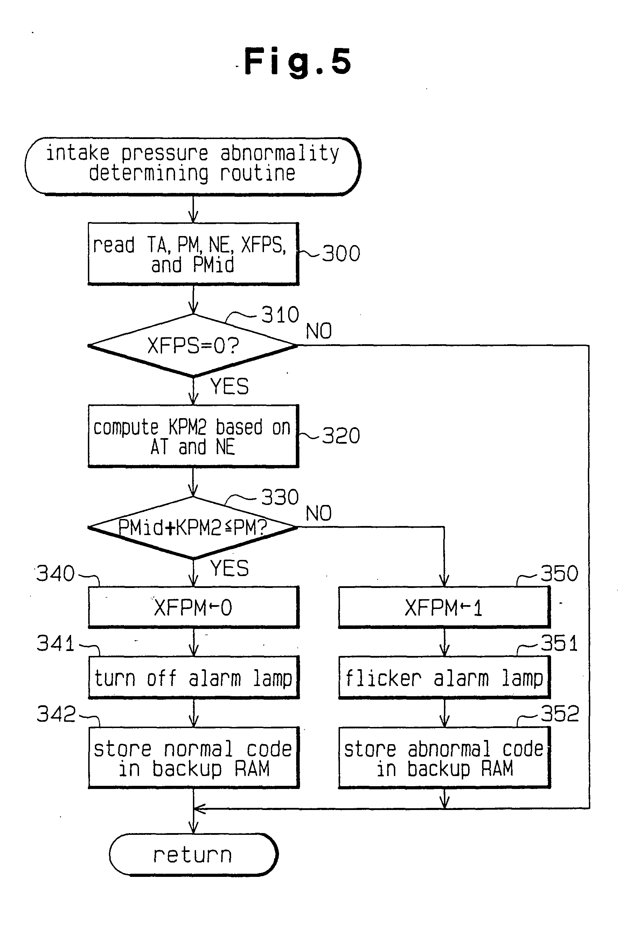

Figure 5 presents a flowchart illustrating a intake pressure abnormality determining routine, which is set to determine an abnormality associated with the intake pressure PM excluding an abnormality in the intake pressure sensor 43. The abnormality associated with the intake pressure may be some damage on the air-intake passage 4 or a failure in the turbocharger 21. The ECU 60 executes this routine every predetermined period.

In step 300, the ECU 60 reads the signals output from the various sensors 42, 43, 46, etc., which are associated with the throttle angle TA, the intake pressure PM and the engine speed NE, as input values. In addition, the ECU 60 reads the value of the sensor flag XFPS stored in the RAM 63 and the learned value PMid stored in the backup RAM 64.

In step 310, the ECU 60 determines if the value of the sensor flag XFPS is zero. When the value of the sensor flag XFPS is one, which means that an abnormality has occurred in the intake pressure sensor 43, the ECU 60 determines that the subsequent decision is impossible and temporarily terminates the subsequent processing. When the value of the sensor flag XFPS is zero, which means that the intake pressure sensor 43 is properly functioning, the ECU 60 proceeds to step 320 to perform the subsequent decision.

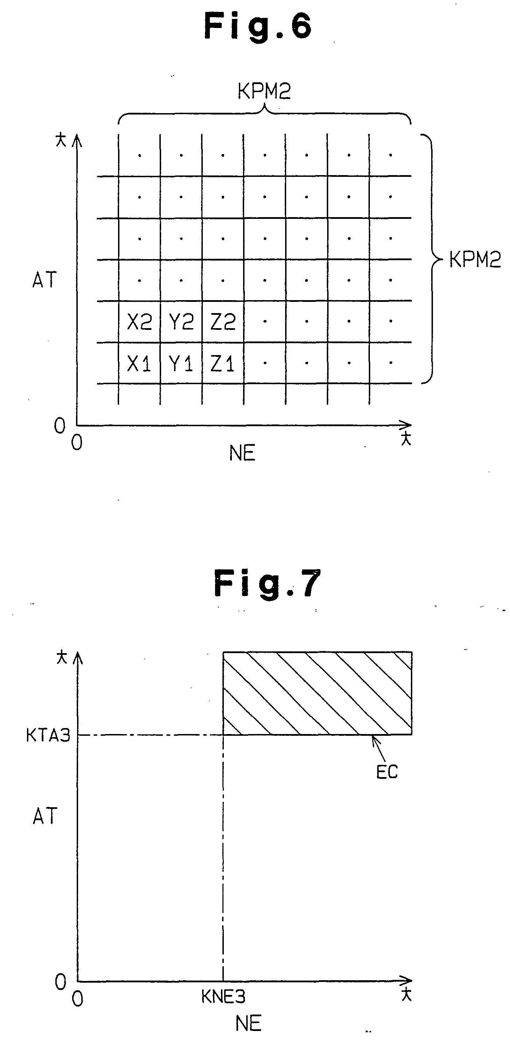

In step 320, the ECU 60 computes the compensation value KPM2 associated with the intake pressure PM according to the running condition of the engine 1 then based on the values of both parameters TA and NE. As shown in Figure 6, the ECU 60 computes this compensation value KPM2 based on the two-dimensional function data (map data) which is preset in association with both parameters TA and NE. The compensation value KPM2 in this function data is set in consideration of the dimensional difference of the engine 1 and turbocharger 21 between vehicles and a variation in the driving condition of the vehicle based on 760 mmHg which is standard atmospheric pressure at sea level. The value of the compensation value KPM2 in this function data is set over the whole range associated with the both parameters TA and NE. Further, the compensation value KPM2 is set to a relative value with a predetermined margin with respect to the atmospheric pressure so that no erroneous determination is made in the situation where the turbocharge pressure is most unlikely to increase.

In step 330, the ECU 60 determines if the value of the currently read intake pressure PM is equal to or greater than the sum of the learned value PMid, which has been learned up to then, and the currently computed compensation value KPM2. When the value of the currently read intake pressure PM is equal to or greater than the sum of the learned value PMid and the compensation value KPM2, the ECU 60 determines that the factors which affect the intake pressure PM, i.e., the turbocharger 21, the air-intake passage 4, etc., are adequate, the ECU 60 proceeds to step 340.

In step 340, the ECU 60 sets a intake pressure flag XFPM to zero to record the proper operations of the turbocharger 21 system, and temporarily stores this flag XFPM into the RAM 63.

In step 341, the ECU 60 turns off the alarm lamp 17. The ECU 60 then stores the normal code indicating that the turbocharger 21 system are properly functioning into the backup RAM 64 in step 342, and temporarily terminates the subsequent processing.

When the value of the intake pressure PM is smaller than the sum of the learned value PMid and the compensation value KPM2 in step 330, the ECU 60 determines that an abnormality has occurred in the turbocharger 21 or its system and proceeds to step 350. The abnormality in the turbocharger 21 system may be due to a fixed open state of the waste gate valve 25, damage to the turbine 23 or clogging of the air cleaner 3.

In step 350, the ECU 60 sets the intake pressure flag XFPM to one to record the occurrence of an abnormality in the turbocharger 21 system, and temporarily stores this flag XFPM into the RAM 63.

In step 351, the ECU 60 blinks the alarm lamp 17 to inform the driver of the occurrence of an abnormality in the turbocharger 21 system. This flickering is distinguished from the lighting of the alarm lamp 17 which is executed when the intake pressure sensor 43 fails. In the next step 352, the ECU 60 stores an abnormal code indicative of an abnormality in the turbocharger 21 system into the backup RAM 64, and temporarily terminates the subsequent processing. The normal code or abnormal code stored in the backup RAM 64 is read out from the backup RAM whenever needed.

In step 330, the ECU 60 compares the learned value PMid with the value of the intake pressure PM on the premise that the intake pressure sensor 43 is normal, and determines if the difference between both values PMid and PM is smaller than the compensation value KPM2. Accordingly, the ECU 60 determines if an abnormality associated with the intake pressure PM or an abnormality in the turbocharger 21 system has occurred.

According to the structure of this embodiment, as described above, when the engine 1 is in the loadless and stable idling state, which is the steady running state, the intake pressure PM in the air-intake passage 4 shows a stable and nearly constant value. The steady running state herein means a little variation in the running state of the engine, and particularly means the state where the engine speed is approximately constant. In particular, the steady running state includes the running state of the engine under the condition where the vehicle runs at low elevation at a constant velocity or the idling state. When the ECU 60 determines that the engine 1 is idling, therefore, the intake pressure PM, which is detected by the intake pressure sensor 43, shows an approximately constant value. At this time, the learned value PMid associated with the intake pressure PM which is learned by the ECU 60 reflects the occasional atmospheric pressure and the occasional state of the air-intake passage 4. This learned value PMid can be a reference value for the case where the intake pressure PM is normal. At this time, the ECU 60 compares the detection value of the sensor 43 or the value of the intake pressure PM with the learned value PMid to determine if an abnormality is present in the intake pressure sensor 43.

When an abnormality occurs in the intake pressure sensor 43 and the value of the intake pressure PM to be detected greatly deviates from the proper value, there is a slight difference between the detection value and the learned value PMid. Therefore, the ECU 60 can determine the occurrence of an abnormality associated with the intake pressure sensor 43. At this time, the learned value PMid to be compared with the- value of the intake pressure PM to be detected is always learned. Even if there is a dimensional difference of the condition associated with the intake pressure PM between vehicles or there is a dimensional change in this condition, the learned value PMid according to the occasional condition is acquired. That is, regardless of the running position of the vehicle, low or high elevation, or regardless of the dimensional difference of the activations of the throttle valve 13 and the turbocharger 21 between vehicles or the dimensional change in such a condition, the learned value PMid reflecting a variation in the condition is always obtained. It is therefore unnecessary to provide an atmospheric pressure sensor to detect a reference value to be compared with the value of the intake pressure PM. Accordingly, an abnormality associated with the intake pressure sensor 43, which includes the disconnection of the pipe 33 or other problem, can be properly detected. Further, the elimination of the atmospheric pressure sensor simplifies the structure of the abnormality detecting apparatus.

According to this embodiment, the presence or absence of an abnormality in the factors associated with the intake pressure PM, such as the air-intake passage 4 and the turbocharger 21, is determined on the premise that the intake pressure sensor 43 is properly functioning. In this respect, the ECU 60 compares the value of the intake pressure PM to be detected with the learned value PMid.

When an abnormality occurs in turbocharger 21 system, a slight difference occurs between the value of the intake pressure PM to be detected and the learned value PMid so that the ECU 60 can determine the occurrence of an abnormality in the turbocharger 21 system. In this determination too, the learned value PMid, which is always learned for comparison with the value of the intake pressure PM, is used. Regardless of a difference in the elevational location of the vehicle, a dimensional difference of the air-intake passage 4, the throttle valve 13 between vehicles or a dimensional change in such a condition, it is possible to always execute a comparison that reflects the condition. An abnormality in the turbocharger 21 system can be detected properly without using any atmospheric pressure sensor.

According to the structure of this embodiment, the ECU 60 computes the compensation values KPM and KPM2 in accordance with the running state of the engine 1. Based on those compensation values KPM and KPM2, the ECU 60 compensates the value of the intake pressure PM, which is to be compared with the learned value PMid. The comparison of both values PM and PMid with each other is therefore performed more properly by the use of those compensation values KPM and KPM2 and the decision on an abnormality by the ECU 60 becomes more accurate. In this sense, it is possible to more properly detect an abnormality associated with the intake pressure sensor 43 or an abnormality associated with the turbocharger 21 or the like.

This embodiment can distinguish an abnormality associated with the intake pressure sensor 43 from an abnormality associated with the turbocharger 21 system. When those abnormalities are detected separately, the alarm lamp 17 is turned on or flickers. Therefore, the driver can distinguish an abnormality associated with the intake pressure sensor 43 from an abnormality associated with the turbocharger 21 or its system and can cope with those abnormalities individually.

In this embodiment, an abnormality associated with the intake pressure sensor 43 and an abnormality associated with the turbocharger 21 or its system are stored in the backup RAM 64 as normal codes or abnormal codes and are readable. At the time of the maintenance of the vehicle, therefore, the worker can read those data and check the history of the occurrence of abnormalities.

According to this embodiment, the intake pressure sensor 43 detects a change in the intake pressure PM as an absolute value. Even at high elevations where the atmospheric pressure becomes low, the intake pressure sensor 43 can more accurately detect the intake pressure PM as compared with a sensor that detects a relative pressure. In this sense, an abnormality associated with the intake pressure sensor 43 or an abnormality associated with the turbocharger 21 or its system is more accurately detected as compared with the case where a relative pressure sensor is used.

A description will be now given of the second embodiment of this invention as adapted to an intake pressure abnormality detecting apparatus for an engine, which is embodied in a gasoline engine system for an automobile. To avoid a redundant description, like or same reference numerals are given to those components that are the same as the corresponding components of the first embodiment. The following description is mainly directed to the differences between the second embodiment and the first embodiment.

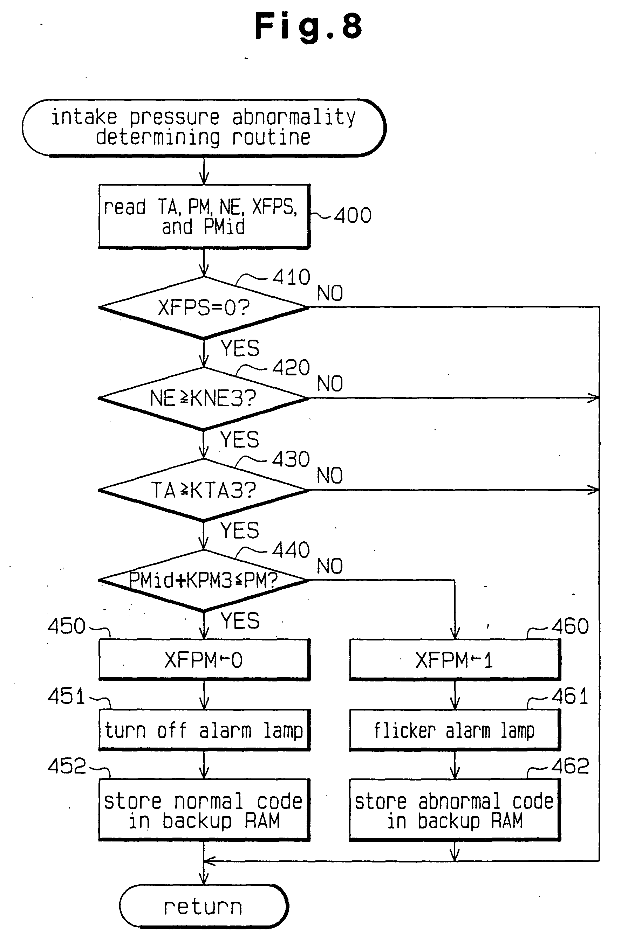

This embodiment differs from the first embodiment in the contents of the intake pressure abnormality determining routine, and the other structure is the same as that of the first embodiment. Figure 8 is a flowchart illustrating the intake pressure abnormality determining routine.

In step 400, the ECU 60 reads the signals output from the various sensors 42, 43, 46, etc., which are associated with the throttle angle TA, the intake pressure PM and the engine speed NE, as input values. In addition, the ECU 60 reads the value of the sensor flag XFPS stored in the RAM 63 and the learned value PMid stored in the backup RAM 64.

In step 410, the ECU 60 determines if the value of the sensor flag XFPS is zero. When the sensor flag XFPS is one, which means that the intake pressure sensor 43 is in a state of failure, the ECU 60 temporarily terminates the subsequent processing. When the sensor flag XFPS is zero, which means that the intake pressure sensor 43 is normal, the ECU 60 proceeds to step 420.

In step 420, the ECU 60 determines if the value of the engine speed NE is equal to or greater than a predetermined reference value KNE3. This reference value KNE3 means the value of the engine speed NE that allows the turbocharger 21 to fully function. 2400 rpm can be set as this reference value KNE3. When the value of the engine speed NE is smaller than the reference value KNE3, which means that the value of the engine speed NE is not large enough to fully operate the turbocharger 21, the ECU 60 temporarily terminates the subsequent processing. When the value of the engine speed NE is equal to or greater than the reference value KNE3, which means that the value of the engine speed NE is large enough to fully operate the turbocharger 21, the ECU 60 proceeds to step 430.

In step 430, the ECU 60 determines if the value of the throttle angle TA is equal to or greater than a predetermined reference value KTA3. In this embodiment, the reference value KTA3 is equivalent to the lower limit which indicates that the throttle valve 13 is fully open. As this reference value KTA3, "52%" as opposed to the fully open state (100%) can be set. When the value of the throttle angle TA is smaller than the reference value KTA3, the value of the throttle angle TA is not large enough to execute the abnormality determination so that the ECU 60 temporarily terminates the subsequent processing. When the value of the throttle angle TA is equal to or greater than the reference value KTA3, the value of the throttle angle TA is large enough to execute the abnormality determination so that the ECU 60 proceeds to step 440.

What is specified by the decisions made in those steps 420 and 430 is a hatched turbocharge area EC in the graph in Figure 7 which is determined by both parameters TA and NE. In this area EC, the turbocharger 21 is fully operable, the waste gate valve 25 is fully opened, and the turbocharge pressure is adjusted to an approximately constant value. When the running state of the engine 1 falls in this area EC, therefore, the ECU 60 proceeds to step 440 from step 430.

In step 440, the ECU 60 determines if the value of the currently read intake pressure PM is equal to or greater than the sum of the learned value PMid, which has been learned up to now, and a predetermined compensation value KPM3. The compensation value KPM3 is so set as to meet the condition of the turbocharge area EC and in consideration of the dimensional difference of the engine 1 and turbocharger 21 between vehicles and a variation in the driving condition of the vehicle based on 760 mmHg which is standard atmospheric pressure. When the value of the intake pressure PM is equal to or greater than the sum of the learned value PMid and the compensation value KPM3, the ECU 60 considers that the intake pressure PM, i.e., the turbocharger 21 which particularly affects the turbocharge pressure is normal and proceeds to step 450.

In step 450, the ECU 60 sets the intake pressure flag XFPM to zero to record the proper operation of the turbocharger 21 and temporarily stores this flag XFPM into the RAM 63.

In step 451, the ECU 60 turns off the alarm lamp 17. The ECU 60 then stores the normal code indicating that the turbocharger 21 is normal into the backup RAM 64 in step 452, and temporarily terminates the subsequent processing.

When the value of the intake pressure PM is smaller than the sum of the learned value PMid and the compensation value KPM3 in step 440, the ECU 60 considers that an abnormality has occurred in the turbocharger 21 for some reason, and proceeds to step 460. The abnormality -in the turbocharger 21 may be a malfunction of the waste gate valve 25, damage to the turbine 23 or something other.

In step 460, the ECU 60 sets the intake pressure flag XFPM to one to record the occurrence of an abnormality in the turbocharger 21 and temporarily stores this flag XFPM into the RAM 63.

In step 461, the ECU 60 blinks the alarm lamp 17 to inform the driver of the occurrence of an abnormality in the turbocharger 21. In the next step 462, the ECU 60 stores an abnormal code indicative of an abnormality in the turbocharger 21 into the backup RAM 64, and temporarily terminates the subsequent processing.

In step 440, the ECU 60 compares the learned value PMid with the value of the intake pressure PM on the premise that the intake pressure sensor 43 is normal. When determining if the difference between both values PMid and PM is smaller than the predetermined compensation value KPM3, the ECU 60 determines that an abnormality associated with the intake pressure PM or an abnormality in the turbocharger 21 has occurred.

According to this embodiment, as described above, the presence or absence of an abnormality in the turbocharger 21 is determined on the premise that the intake pressure sensor 43 is normal. Accordingly, the ECU 60 compares the intake pressure PM to be detected, i.e., the value of the turbocharge pressure, with the learned value PMid which is always learned.

When an abnormality occurs in the turbocharger 21, therefore, there is a slight difference between the intake pressure PM to be detected, i.e., the value of the turbocharge pressure, and the learned value PMid. At this time, the ECU 60 can determine that an abnormality has occurred in the turbocharger 21. The use of the learned value PMid for the comparison with the turbocharge pressure can permit comparison to always reflect the condition regardless of a difference in the elevational location of the vehicle, a dimensional difference of the air-intake passage 4, the throttle valve 13 or the like between vehicles or a dimensional change in such a condition. Like the first embodiment, the second embodiment can therefore properly detect an abnormality in the turbocharger 21 or its system without using an atmospheric pressure sensor.

According to this embodiment, particularly, the running state of the engine 1 for determining the presence or absence of an abnormality in the turbocharger 21 is limited to the turbocharge area EC, which is determined by both parameters TA and NE as shown in Figure 7. In this area EC, the turbocharge pressure fluctuates less and varies less. Therefore, the compensation value KPM3 that should be used to compensate the turbocharge pressure (intake pressure PM) for comparison with the learned value PMid may be set to a constant value. In this case, the computation to be performed by the ECU 60 becomes simpler as compared with the computation of the compensation value KPM2, which is performed based on the function data as shown in Figure 6 in the first embodiment, so that the number of pieces of data to be stored in the ROM 62 can be reduced.

Because the other operation and advantages of this embodiment are the same as those of the first embodiment, their descriptions will not be repeated.

Although only two embodiments of the present invention have been described herein, it should be apparent to those skilled in the art that the present invention may be embodied in many other specific forms without departing from the scope of the appended claims. Particularly, it should be understood that this invention may be embodied in the following forms.

In the above-described embodiments, the loadless and stable idling state is treated as the steady running state and the learned value associated with the intake pressure PM then is learned under this condition. Alternatively, the state other than the idling state and where the engine 1 runs at a predetermined engine speed NE may be treated as the steady running state and the learned value associated with the intake pressure PM then may be learned under such a condition.

In the first embodiment, the compensation value KPM for compensating the intake pressure PM for comparison with the learned value PMid is computed based on both parameters TA and NE in the intake pressure sensor abnormality determining routine. This compensation value KPM may however be set to a constant.

In the second embodiment, the compensation value KPM3 for compensating the turbocharge pressure for comparison with the learned value PMid is set to a constant in the intake pressure abnormality determining routine. This compensation value KPM3 may however be a variable which is computed based on both parameters TA and NE.

Although this invention is adapted to the engine which has the turbocharger 21 as an air pressure booster in the above-described embodiments, this invention may be adapted for use in an engine that has a supercharger or another mechanism as a booster.

Although this invention is adapted to the engine which has the turbocharger 21 as an air pressure booster in the above-described embodiments, this invention may be adapted for use in an engine that has no air pressure booster.

Although this invention is embodied in a gasoline engine system in the above-described embodiments, this invention may be embodied in a Diesel engine system.

Therefore, the present examples and embodiments are to be considered as illustrative and not restrictive and the invention is not to be limited to the details given herein, but may be modified within the scope of the appended claims.

## Claims

1. Apparatus for detecting intake pressure abnormality of an engine (1) having an intake passage (4) for introducing air to a combustion chamber (1a) and an exhaust passage (11) for exhausting gas from the combustion chamber (1a), said apparatus having a pressure sensor (43) for detecting intake pressure (PM) in the intake passage (4), a computer (60) for determining an abnormality associated with the intake pressure (PM) including an abnormality of said pressure sensor (43) to compare said detected intake pressure (PM) with a predetermined reference value, and at least one sensor (42, 46, 48, 49) for detecting a running condition of the engine (1), wherein said computer (60) determines if the engine (1) is in a predetermined steady running condition based on the detected running condition, said apparatus being **characterized by** that
said computer learns the detected intake pressure as a learned value (PMid) when the engine (1) is determined to be in said steady running condition, and
said computer (60) compares the learned value (PMid) with the detected intake pressure (PM) and determines that an abnormality associated with the intake pressure (PM) has occurred when a difference between the learned value and the intake pressure (PM) is smaller than a predetermined value (KPM, KPM2, KPM3).

2. The apparatus as set forth in claim 1, **characterized by** that said computer (60) compares the learned value with the detected intake pressure (PM) and determines that an abnormality associated with the pressure sensor (43) has occurred when a difference between the learned value (PMid) and the intake pressure (PM) is smaller than a predetermined value (KPM, KPM2, KPM3).

3. The apparatus as set forth in claim 1, **characterized by** that said computer (60) determines that the pressure sensor (43) is in a normal state when a difference between the learned value and the detected intake pressure (PM) is equal to or greater than a predetermined value, and wherein said computer (60) determines that an abnormality associated with the intake passage (4) has occurred when a difference between the learned value and the intake pressure (PM) is smaller than a predetermined value (KPM, KPM2, KPM3).

4. The apparatus as set forth in any one of the preceding claims, **characterized by** that the intake passage (4) has an air pressure booster (21) for boosting the pressure of air introduced to the combustion chamber (1a), wherein the pressure sensor (43) is provided in the intake passage (4) downstream of said air pressure booster (21).

5. The apparatus as set forth in claim 4, **characterized by** that said abnormality associated with the intake pressure (PM) or the intake passage (4) includes an abnormality of the air pressure booster (21).

6. The apparatus as set forth in claim 4 or 5, **characterized by** that said air pressure booster includes a turbocharger (21) provided between the intake passage (4) and the exhaust passage (11).

7. The apparatus as set forth in any one of the preceding claims, **characterized by** that said steady running condition is a stable idling state of the engine (1), wherein at least one of the sensor includes a first sensor (46) for detecting the speed of the engine (1), a second sensor (43) for detecting the opening of a throttle valve (13) provided in the intake passage (4) and a third sensor (48, 49) for detecting the existence of load on the engine (1), wherein the computer (60) determines said stable idling state based on values detected by the first, second and third sensors (46, 43, 48, 49).

8. The apparatus as set forth in any one of the preceding claims, **characterized by** that said at least one sensor includes a first sensor (46) for detecting speed of the engine (1) and a second sensor (43) for detecting opening of a throttle valve (13) provided in the intake passage (4), wherein the computer (60) compares the learned value (Pmid) with the detected intake pressure (PM) when the detected engine speed reaches a value greater than that of an idling state of the engine (1) and the detected opening reaches a value indicating that the throttle valve (13) is substantially opened.

9. The apparatus as set forth in any one of the preceding claims, **characterized by** that said computer is an electronic control unit (60) having an input signal circuit (66), a memory (62, 63,64), an operation circuit (61) and an output signal circuit (67).

10. The apparatus as set forth in any one of the preceding claims, **characterized by** that said computer (60) further including a warning device (17) for warning of an abnormality when the occurrence of an abnormality is determined.

11. The apparatus as set forth in any one of the preceding claims, **characterized by** that said computer (60) further includes a backup memory (64) for storing an abnormal code indicative of an abnormality when the occurrence of the abnormality is determined.

## Patentansprüche

1. Vorrichtung zum Erfassen einer Anormalität des Ansaugdrucks einer Kraftmaschine (1) mit einem Ansaugkanal (4) zum Einleiten von Luft in einen Verbrennungsraum (1a) und einem Auslaßkanal (11) zum Ausstoßen von Gas aus dem Verbrennungsraum (la), wobei die Vorrichtung einen Drucksensor (43) zum Erfassen eines Ansaugdrucks (PM) im Ansaugkanal (4), einen Computer (60) zum Bestimmen einer mit dem Ansaugdruck (PM) in Zusammenhang stehenden Anormalität einschließlich einer Anormalität des Drucksensors (43), um den erfaßten Ansaugdruck (PM) mit einem vorgegebenen Bezugswert zu vergleichen, und mindestens einen Sensor (42, 46, 48, 49) zum Erfassen eines Laufzustands der Kraftmaschine (1) aufweist, wobei der Computer (60) auf der Grundlage des erfaßten Laufzustands bestimmt, ob sich die Kraftmaschine (1) in einem vorgegebenen stetigen Laufzustand befindet, wobei die Vorrichtung **dadurch gekennzeichnet** ist, daß der Computer den erfaßten Ansaugdruck als Lernwert (PMid) lernt, wenn bestimmt wird, daß sich die Kraftmaschine (1) in dem stetigen Laufzustand befindet, und
der Computer (60) den je nach den Laufzuständen der Kraftmaschine (1) durch einen Kompensationswert (KPM) kompensierten Lernwert (PMid) mit dem erfaßten Ansaugdruck (PM) vergleicht und bestimmt, daß eine mit dem Ansaugdruck (PM) in Zusammenhang stehende Anormalität aufgetreten ist, wenn eine Differenz zwischen dem kompensierten Lernwert und dem Ansaugdruck (PM) gleich oder größer als ein vorgegebener Wert ist.

2. Vorrichtung nach Anspruch 1, **dadurch gekennzeichnet, daß** der Computer (60) den kompensierten Lernwert mit dem erfaßten Ansaugdruck (PM) vergleicht und bestimmt, daß eine mit dem Drucksensor (43) in Zusammenhang stehende Anormalität aufgetreten ist, wenn eine Differenz zwischen dem kompensierten Lernwert und dem Ansaugdruck (PM) gleich oder größer als ein vorgegebener Wert ist.

3. Vorrichtung nach Anspruch 1, **dadurch gekennzeichnet, daß** der Computer (60) bestimmt, daß sich der Drucksensor (43) in einem normalen Zustand befindet, wenn eine Differenz zwischen dem kompensierten Lernwert und dem erfaßten Ansaugdruck (PM) kleiner als ein vorgegebener Wert ist, und wobei der Computer (60) bestimmt, daß eine mit dem Ansaugkanal (4) in Zusammenhang stehende Anormalität aufgetreten ist, wenn eine Differenz zwischen dem kompensierten Lernwert und dem Ansaugdruck (PM) gleich oder größer als ein vorgegebener Wert ist.

4. Vorrichtung nach einem der vorhergehenden Ansprüche, **dadurch gekennzeichnet, daß** der Ansaugkanal (4) einen Luftdruckverstärker (21) zum Verstärken des Drucks der in den Verbrennungsraum (1a) eingeleiteten Luft aufweist, wobei der Drucksensor (43) im Ansaugkanal (4) in Strömungsrichtung hinter dem Luftdruckverstärker (21) vorgesehen ist.

5. Vorrichtung nach Anspruch 4, **dadurch gekennzeichnet, daß** die mit dem Ansaugdruck (PM) oder dem Ansaugkanal (4) in Zusammenhang stehende Anormalität eine Anormalität des Luftdruckverstärkers (21) mit umfaßt.

6. Vorrichtung nach Anspruch 4 oder 5, **dadurch gekennzeichnet, daß** der Luftdruckverstärker einen zwischen dem Ansaugkanal (4) und dem Auslaßkanal (11) vorgesehenen Turbolader (21) aufweist.

7. Vorrichtung nach einem der vorhergehenden Ansprüche, **dadurch gekennzeichnet, daß** der stetige Laufzustand ein stabiler Leerlaufzustand der Kraftmaschine (1) ist, wobei mindestens einer der Sensoren einen ersten Sensor (46) zum Erfassen der Drehzahl der Kraftmaschine (1), einen zweiten Sensor (43) zum Erfassen des Öffnungsgrades einer im Ansaugkanal (4) vorgesehenen Drosselklappe (13) und einen dritten Sensor (48, 49) zum Erfassen des Anliegens einer Last an der Kraftmaschine (1) beinhaltet, wobei der Computer (60) den stabilen Leerlaufzustand auf der Grundlage von durch den ersten, zweiten und dritten Sensor (46, 43, 48, 49) erfaßten Werten bestimmt.

8. Vorrichtung nach einem der vorhergehenden Ansprüche, **dadurch gekennzeichnet, daß** der mindestens eine Sensor einen ersten Sensor (46) zum Erfassen einer Drehzahl der Kraftmaschine (1) und einen zweiten Sensor (43) zum Erfassen des Öffnungsgrades einer im Ansaugkanal (4) vorgesehenen Drosselklappe (13) beinhaltet, wobei der Computer (60) den Lernwert (Pmid) mit dem erfaßten Ansaugdruck (PM) vergleicht, wenn die erfaßte Kraftmaschinendrehzahl einen Wert erreicht, der größer als derjenige eines Leerlaufzustands der Kraftmaschine (1) ist und der erfaßte Öffnungsgrad einen Wert erreicht, der anzeigt, daß die Drosselklappe (13) im wesentlichen geöffnet ist.

9. Vorrichtung nach einem der vorhergehenden Ansprüche, **dadurch gekennzeichnet, daß** der Computer eine elektronische Steuereinheit (60) mit einer Eingangssignalschaltung (66), einem Speicher (62, 63, 64), einem Arbeitsstromkreis (61) und einer Ausgangssignalschaltung (67) ist.

10. Vorrichtung nach einem der vorhergehenden Ansprüche, **dadurch gekennzeichnet, daß** der Computer (60) des weiteren eine Warneinrichtung (17) zum Hinweisen auf eine Anormalität aufweist, wenn bestimmt wird, daß eine Anormalität aufgetreten ist.

11. Vorrichtung nach einem der vorhergehenden Ansprüche, **dadurch gekennzeichnet, daß** der Computer (60) des weiteren einen Sicherungsspeicher (64) zum Speichern eines eine Anormalität anzeigenden, abnormalen Codes aufweist, wenn das Auftreten einer Anormalität bestimmt wird.

## Revendications

1. Dispositif pour détecter une anomalie de pression d'admission d'un moteur (1) ayant un passage d'admission (4) pour introduire de l'air dans une chambre de combustion (1 a) et un passage d'échappement (11) pour faire échapper les gaz de la chambre de combustion (1a), ledit dispositif comportant un capteur de pression (43) pour détecter la pression d'admission (PM) dans le passage d'admission (4), un ordinateur (60) pour déterminer une anomalie associée à la pression d'admission (PM) incluant une anomalie dudit capteur de pression (43) pour comparer ladite pression d'admission détectée (PM) à une valeur de référence prédéterminée, et au moins un capteur (42, 46, 48, 49) pour détecter une condition de fonctionnement du moteur (1), dans lequel ledit ordinateur (60) détermine si le moteur (1) est dans une condition de fonctionnement en régime normal prédéterminé sur la base de la condition de fonctionnement détectée, ledit dispositif étant **caractérisé en ce que** :
ledit ordinateur apprend la pression d'admission détectée comme une valeur apprise (PMid) lorsque le moteur (1) est déterminé être dans la condition de fonctionnement en régime normal, et
ledit ordinateur (60) compare la valeur apprise (PMid) à la pression d'admission détectée (PM) et détermine qu'une anomalie associée à la pression d'admission (PM) s'est produite lorsqu'une différence entre la valeur apprise et la pression d'admission (PM) est plus petite qu'une valeur prédéterminée (KPM, KPM 2, KPM 3).

2. Dispositif selon la revendication 1, **caractérisé en ce que** ledit ordinateur (60) compare la valeur apprise à la pression d'admission détectée (PM) et détermine qu'une anomalie associée au capteur de pression (43) s'est produite lorsqu'une différence entre la valeur apprise (PMid) et la de la pression d'admission (PM) est plus petite qu'une valeur prédéterminée (KPM, KPM2, KPM3).

3. Dispositif selon la revendication 1, **caractérisé en ce que** ledit ordinateur (60) détermine que le capteur de pression (43) est dans un état normal lorsqu'une différence entre la valeur apprise et la pression d'admission détectée (PM) est égale à supérieure à une valeur prédéterminée, et dans lequel ledit ordinateur (60) détermine qu'une anomalie associée au passage d'admission (4) s'est produite lorsqu'une différence entre la valeur apprise et la pression d'admission (PM ) est plus petite qu'une valeur prédéterminée (KPM, KPM2, KPM3).

4. Dispositif selon l'une quelconque des revendications précédentes, **caractérisé en ce que** le passage d'admission (4) comporte un compresseur de pression d'air (21) pour compresser la pression de l'air introduit dans la chambre de combustion (1a), dans lequel le capteur de pression (43) est disposé dans le passage admission (4) en aval dudit compresseur de pression d'air (21).

5. Dispositif selon la revendication 4, **caractérisée en ce que** ladite anomalie associée à la pression d'admission (PM) ou passage d'admission (4) inclut une anomalie dudit compresseur de pression d'air (21).

6. Dispositif selon la revendication 4 ou 5, **caractérisé en ce que** ledit compresseur de pression d'air inclut un turbocompresseur (21) disposé entre le passage admission (4) et le passage d'échappement (11).

7. Dispositif selon l'une quelconque des revendications précédentes, **caractérisé en ce que** la condition de fonctionnement en régime normal est un état de fonctionnement au ralenti stable du moteur (1), dans lequel au moins un des capteurs inclut un premier capteur (46) pour détecter la vitesse du moteur (1), un second capteur (43) pour détecter l'ouverture d'une soupape d'étranglement (13) disposée dans le passage d'admission (4) et un troisième capteur (48,49) pour détecter l'existence d'une charge sur le moteur (1), dans lequel l'ordinateur (60) détermine ledit état de fonctionnement au ralenti stable sur la base des valeurs détectées par les premiers, second et troisième capteurs (46, 43, 48, 49).

8. Dispositif selon l'une quelconque des revendications précédentes, **caractérisé en ce que** ledit au moins un capteur inclut un premier capteur (46) pour détecter la vitesse du moteur (1) et un second capteur (43) pour détecter l'ouverture d'une soupape d'étranglement (13) disposée dans le passage d'admission (4), dans lequel l'ordinateur (60) compare la valeur apprise (PMid) à la pression d'admission détectée (PM). lorsque la vitesse du moteur détectée atteint une valeur plus grande que celle d'un état de fonctionnement au ralenti du moteur (1) et que l'ouverture détectée atteint une valeur indiquant que la soupape d'étranglement (13) est sensiblement ouverte.

9. Dispositif selon l'une quelconque des revendications précédentes, **caractérisé en ce que** ledit ordinateur est une unité de commande électronique (60) ayant un circuit de signal d'entrée (66), une mémoire (62, 63, 64), un circuit d'opérations (61) et un circuit de signal de sortie (67).

10. Dispositif selon l'une quelconque des revendications précédentes, **caractérisé en ce que** ledit ordinateur (60) comprend, en outre, d'un dispositif d'avertissement (17 ) pour avertir d'une anomalie lorsque l'occurrence d'une anomalie est déterminée.

11. Dispositif selon l'une quelconque des revendications précédentes, **caractérisé en ce que** ledit ordinateur (60) comprend, en outre, une mémoire de sauvegarde (64) pour mémoriser un code d'anomalie représentatif d'une anomalie lorsque la présence de l'anomalie est déterminée.
